# EUROPEAN PATENT SPECIFICATION

(11) **EP 1 746 790 B1**
(45) Date of publication and mention of the grant of the patent: **23.09.2009**
(21) Application number: 05254528.2
(22) Date of filing: 20.07.2005
(51) Int. Cl.: H04L 12/58, H04L 29/06

(54) **Method of sharing an Instant Messaging history**
Verfahren zum Teilen einer Geschichte von Instant Messaging
Procédé pour partager une histoire de messagerie instantanée

(43) Date of publication of application: 24.01.2007
(73) Proprietor: Research In Motion Limited, Waterloo, Ontario N2L 3W8 (CA)
(72) Inventor: Fahmy, Samer, Waterloo, Ontario N2L 3P8 (CA); Klassen, Gerhard Dietrich, Waterloo, Ontario N2T 1H7 (CA)
(74) Representative: Hibbert, Juliet Jane Grace

(56) References cited:
- EP-A- 1 209 849
- US-A1- 2003 043 186

## Description

### FIELD OF THE DISCLOSURE

The present patent disclosure generally relates to instant messaging. More particularly, and not by way of any limitation, the present patent application is directed to a scheme for sharing instant message (IM) history developed during an IM communication session involving two or more parties.

### BACKGROUND

The Internet has changed the way people communicate. For many people, electronic mail, known as "email," has practically replaced traditional letters and in some instances, phone calls, as the primary means of communication. Users of the Internet send literally millions of email messages across the Internet on a daily basis. The popularity of being able to send messages anywhere in the world in a matter of minutes, or even seconds, has made email the most rapidly accepted form of correspondence to date. The use of email has risen from obscurity, used once only by academics and the military, to the dominant mode of public communication in less than twenty years.

However, in our fast-paced world where the desire for access to more information at a faster fate increases on a daily basis, the once rapid response of email communications is no longer fast enough to keep pace with society's need. One way to help people communicate faster was the creation of instant messaging (IM) services. IM services allow for nearly real-time communications because the users or subscribers sending and receiving messages are continually connected to an IM service. The speed at which recipients get IM messages is determined by the speed the data can travel across the Internet. When a subscriber logs into an IM service, the service lets an IM server know that the user is available to receive messages. To send a message to a recipient, the subscriber simply selects the name of the recipient, usually from a contact list that contains the recipient's IM address, and types the message.

The core of IM is based on the concept of "presence management," which determines where a user is connected to the Internet, the availability of the user, and on what system the user resides. Similar to email, a system level designation (domain) is the first tier of recognizing where to reach a particular user. IM, however, requires at least two additional elements (location and status) that make up the core of presence management. The immediate nature of this type of communication requires that the exact IP address of the person and their willingness to accept a message be known in order to set up a connection.

IM was initially available only to dial-up Internet users, which made location specific information extremely important. In the last couple of years the access of IM services has spread across mobile handheld devices, such as cellular telephones, personal digital assistants (PDAs), and almost any system capable of Internet access. This proliferation has added the need to manage other elements of presence that did not exist in the past. With the potential to have multiple devices active, such as personal computer (PC), PDA, cellular telephone, pager, etc., the presence system must be able to identify and manage each Internet device connected to the Internet and determine to which device messages should be forwarded.

Currently, three architectural schema are available for facilitating the transmission of instant messages between subscribers on their network. The first scheme uses a centralized network, in which subscribers are connected to one another through a series of network servers. The individual servers are linked together to form a large, centralized network. In this architecture, each server keeps track of the presence information and connections for each user connected to the network. When a subscriber sends a message, the server determines the location of the recipient's computer by contacting all of the other network servers and routes the message through the network servers until it reaches the recipient. This particular method is used by Microsoft Network (MSN®) Messenger IM service.

A second scheme of transmitting instant messages uses a peer-to-peer architecture favored by systems using ICQ protocol (pronounced "I seek you"), such as the Yahoo!® Messenger IM service. In the peer-to-peer approach, the central ICQ server keeps track of which subscribers are currently online and records their Internet Protocol (IP)-based IM addresses. Once a subscriber logs on to the ICQ server, the ICQ server scans the subscriber's contact list and displays to the subscriber the Internet IM protocol address of every person on the contact list currently logged onto the IM server. When the subscriber wants to send a message to a recipient on the ICQ server, the subscriber simply selects the name of the recipient, types a message, and transmits the message. Because the ICQ client on the subscriber's computer has the Internet Protocol IM address of the recipient, the message is sent directly to the ICQ client residing on the recipient's computer without involving the ICQ server. This method has an advantage over the centralized network system because the messages do no travel through the entire network, which speeds the transfers of large files, such as documents and images because they are not slowed by network traffic.

When the conversation is complete, the subscriber exits the IM program, at which point the ICQ client on the subscriber's computer generates a message to the ICQ server to terminate the session. The ICQ client then sends a message to each ICQ client on the subscriber's contact list, that are currently logged onto the ICQ server, indicating that the subscriber has terminated his session.

The last method of transmitting instant messages is using a hybrid system that combines the centralized network approach with the peer-to-peer approach. America On Line's (AOL®'s) Instant Messaging (AIM®) service currently uses this method. The AOL® AIM Service uses the centralized network approach for transmitting text messages and performing presence management. Because text messages are usually small, transmitting them over the network does not noticeably slow their delivery. However, for large files, such as documents and images, AOL® AIM service uses ICQ protocol to establish a peer-to-peer connection between the subscriber and the recipient of the message.

Because of the speed and popularity of IM, a fairly large conversation may be quickly developed in a communication session regardless of which particular IM architecture is employed. Unfortunately, there is no easy way to share an IM conversation with one or more parties (other than the person in the conversation) while the current session is still underway. It should be apparent to one skilled in the art that mechanisms such as "copy and paste" are woefully inadequate as well as cumbersome.

EP 1 209 849 A2 (IBM) discloses an apparatus for persistent chat sessions. A user may select a user identifier of another user who is not a participant in the chat session and then request to invite the non-participant to join the chat session.

### SUMMARY

In one embodiment, a scheme is disclosed for sharing Instant Messaging (IM) history developed during an IM communication session. While a communication session is going on, the message history developed during the session may be exported based on selecting a particular transmission mode for export.

In one aspect, a method is disclosed for sharing a message history associated with an instant message "IM" communication session between two parties, which method includes: receiving a selection of a menu option in an IM communication session, the menu option corresponding to a request for sending a message history using a selected transmission mode, wherein the selected transmission mode includes at least one of a facsimile transmission mode, an electronic mail "email" transmission mode, and a Short Message Service "SMS" transmission mode; responsive to receiving the selection of the menu option, receiving a selection of a recipient for receiving the message history; wrapping the message history into a file object based on the selected transmission mode for sharing the message history with the selected recipient; and, transmitting the file object to the selected recipient via the selected transmission mode.

In another aspect, a system is disclosed for sharing a message history associated with an instant message "IM" communication session between two parties, the system including: means for selecting a menu option in the IM communication session, the menu option including a selected transmission mode; means for determining and selecting a recipient for receiving the message history; means for wrapping the message history into a file object based on a selected transmission mode for sharing the message history with the selected recipient, wherein the selected transmission mode comprises at least one of a facsimile transmission mode, an electronic mail "email" transmission mode, and a Short Message Service "SMS" transmission mode; and, means for transmitting the file object to the selected recipient in accordance with the selected transmission mode.

In a further aspect, also disclosed is a communications device operable with a program module for effectuating an instant message "IM" communication functionality, the communication device including: means for receiving activation of a message history sharing functionality in an IM communication session; responsive to the means for receiving, means for wrapping a message history relating to the IM communication session into a file object; and, means for transmitting the file object to a recipient responsive to receiving a selection of a transmission mode, wherein the selected transmission mode includes at least one of a facsimile transmission mode, an electronic mail "email" transmission mode, and a Short Message Service "SMS" transmission mode.

### BRIEF DESCRIPTION OF THE DRAWINGS

A more complete understanding of the embodiments of the present patent disclosure may be had by reference to the following Detailed Description when taken in conjunction with the accompanying drawings wherein:

FIG. 1 depicts a generalized network environment wherein an embodiment of the present patent disclosure may be practiced;

FIG. 2 depicts a flowchart of an embodiment for sharing IM message history in accordance with the teachings of the present patent disclosure;

FIG. 3 depicts a rendition of a graphic display window that allows a number of IM options in accordance with one embodiment of the present patent disclosure;

FIG. 4 depicts an exemplary graphic display window associated with an IM client application on a communications device;

FIGS. 5A and 5B depict exemplary graphic display windows provided for sharing IM message history in accordance with one embodiment of the present patent disclosure; and,

FIG. 6 depicts a block diagram of an embodiment of a communications device operable with a program module provided according to the teachings of the present patent disclosure for sharing IM message history.

### DETAILED DESCRIPTION OF THE DRAWINGS

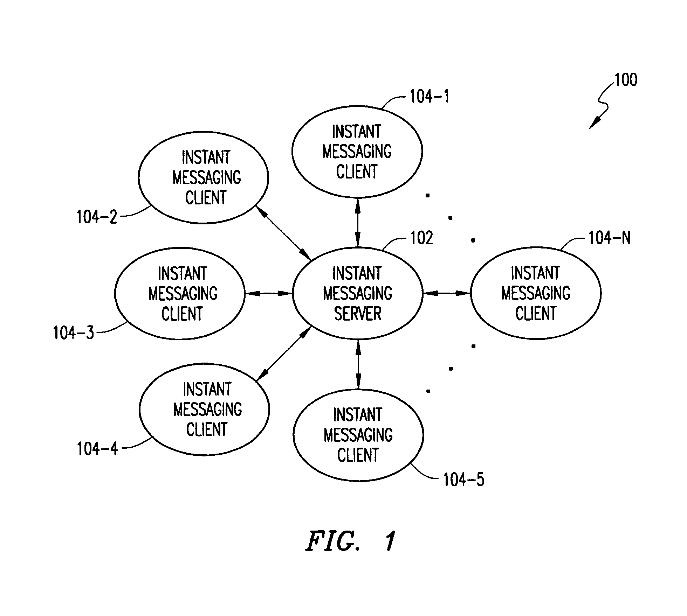

A system and method of the present patent disclosure will now be described with reference to various examples of how the embodiments can best be made and used. Like reference numerals are used throughout the description and several views of the drawings to indicate like or corresponding parts, wherein the various elements are not necessarily drawn to scale. Referring now to the drawings, and more particularly to FIG. 1, depicted therein is an exemplary generalized network environment 100 wherein an embodiment of the present patent disclosure may be practiced for sharing IM message history. One or more central IM servers, e.g., IM server 102, are operably connected via an IP-based network to a number of individual IM clients (104-1 through 104-N), each of which is executed on any suitable IM-capable user equipment. For example, such user equipment may comprise any personal computer (e.g., desktops, laptops, palmtops, or handheld computing devices) or a mobile communications device (e.g., cellular phones or data-enabled handheld devices capable of receiving and sending messages, web browsing, et cetera), or any enhanced PDA device or integrated information appliance capable of email, video mail, Internet access, corporate data access, messaging, calendaring and scheduling, information management, and the like. Where a wireless communications device is provided as IM-capable user equipment, such a device may preferably be operable in one or more modes of operation and in a number of frequency bands. That is, in some implementations, the exemplary user equipment (now generalized as a communications device) may operate in known cellular telephony band frequencies as well as wireless Local Area Network (WLAN) bands. Additionally, where cellular telephony infrastructure is involved, the network environment 100 may include a General Packet Radio Service (GPRS) network that provides a packet radio access for mobile devices using the infrastructure of a Global System for Mobile Communications (GSM)-based carrier network. By way of further generalization, the network environment 100 may also comprise networks selected from at least one of an Enhanced Data Rates for GSM Evolution (EDGE) network, an Integrated Digital Enhanced Network (IDEN), a Code Division Multiple Access (CDMA) network, a Time Division Multiple Access (TDMA) network, a Universal Mobile Telecommunications System (UMTS) network, or any 3^{rd} Generation Partnership Project (3GPP)-compliant network (e.g., 3GPP or 3GPP2), all operating with well known frequency bandwidths and protocols for providing packet data services to IM-capable communications devices.

To send an IM, for example, from client 104-1 to client 104-N, IM client 104-1 first connects with IM server 102 using an IM protocol, either proprietary or industry-standard. Once the IM client 104-1 is connected to the IM server 102, the user/subscriber logs on by entering a user name and password. The IM client 104-1 then sends the IM server 102 the connection information, such as the IP address and number of the port assigned to the IM client and the name and address of everyone in the IM contact list associated with the IM client 104-1.

The IM server 102 then creates a temporary file that contains the connection information for the IM client 104-1 and for each IM client. Once the temporary files have been created, the IM server 102 checks the network to determine whether any IM client identified by the contact list associated with IM client 104-1 is currently logged into the system. If the IM server 102 finds any of the contacts logged onto the network, the IM server 102 sends a message back to the IM client 104-1 with the connection information for each IM client currently logged onto the network. When the IM client 104-1 receives the connection information, the status of that particular IM client is updated to "Online," which is displayed to the user. At this point the user may select any IM client that is registered "Online," whereupon a dialog box will appear in which the user may enter text. Because the IM client 104-1 knows the address and port number of the IM client 104-N, the message is sent directly to the recipient IM client 104-N. The IM client 104-N then receives the instant message and can respond immediately. Once the IM session is complete the dialog box is closed and the IM client 104-1 goes offline and sends a message to the IM server 102 terminating the session. The IM server 102, in response to acknowledging that the IM client 104-1 has logged off, generates a message to each of the IM clients on the client list of IM client 104-1 indicating that IM client 104-1 is logged off the network.

As will be seen below, enhanced IM functionality for dynamically sharing IM message history (i.e., the conversation or chat going back and forth between two IM subscribers engaged in an IM communication session such as the one described above) before terminating the IM session may be provided in accordance with the teachings of the present disclosure by way of a computer program module operable with the IM-capable communications device. In one implementation, such a computer program module may be provided as a plug-in that is operable with any of known IM client applications such as, e.g., an i3Connect Vista client, an ICQ client, an AOL® Instant Messenger (AIM®) client, a Microsoft Network (MSN) Messenger client, a Yahoo!® Messenger client, a JABBER client, a Miranda® IM client, an Internet Relay Chat (IRC) client, and the like. In another implementation, such a computer program module may be integrated within a proprietary IM application that can interoperate with commercially available IM applications.

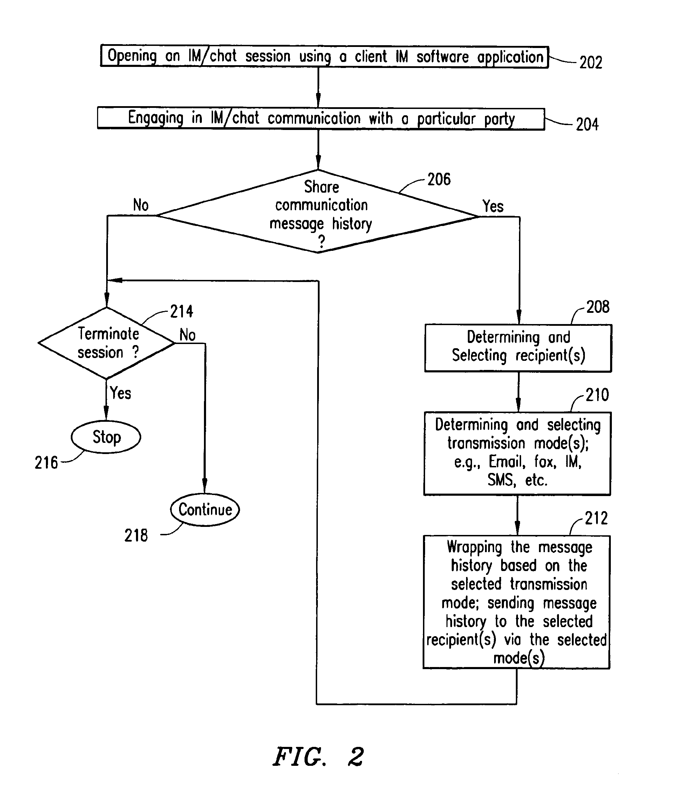

FIG. 2 depicts a flowchart of an embodiment for sharing IM message history in accordance with the teachings of the present patent disclosure, which IM message history may be developed during an IM communication session involving two or more parties regardless of the underlying IM architecture. A subscriber opens an IM/chat communication session by using a client IM software application running on his or her communications device (block 202). Upon logging in and identifying a particular party to communicate with, the subscriber engages in IM/chat communication with the particular party (204). After developing a message history, a determination may be made by a party (the subscriber, the particular party that the subscriber has been corresponding with via the current IM session, or both) if the message history is to be shared with a selected recipient (which can be either one of the parties currently engaged, or one or more third parties selected by either of the parties) (decision block 206). If the message history is not to be shared, another decision is made if the current session is to be terminated (decision block 214). If so, the IM session is terminated and the subscriber is logged off (block 216). Otherwise, the subscriber may continue to engage in the IM communications with the particular party (block 218).

If either of the parties decides to share the IM message history developed during the current IM communication session, a menu-driven option list is provided within the current IM dialog box for facilitating: (i) determination and selection of one or more recipients with whom the message history is to be shared; and (ii) determination and selection of appropriate transmission mode (e.g., email, fax, IM, Short Message Service or SMS, et cetera). These steps are set forth in blocks 208 and 210 of the exemplary flowchart, which may be executed in any sequential or parallel order. In one embodiment, such menu-driven "message history sharing" options may be implemented as a series of pull-down dialog boxes that are selectable from the IM session's message thread window or from its task/tool/property bar. Alternatively, the options may be selected from the message composition window or its task/tool/property bar. In yet another embodiment, the message history sharing options may be provided as software buttons in either of the IM windows that a user may click on. Irrespective of these and other implementation variations, the program software activated by the selected message history sharing options is operable to appropriately wrap the message history in a file object based on the recipient(s) and corresponding transmission mode(s) so that the "look and feel" of the conversation is preserved as needed (block 212). For example, colors, sounds, smileys, graphic icons and other embedded objects, shorthand text message phrases, screen names, nicknames, etc., of a message history are maintained in the wrapped file object created for export transmission. Where email is used for export, the file object may be sent as an attached document to the selected recipient's email address. Or, the file object may comprise part of the email message body itself. If IM is used for export, a determination may be made whether the recipient's IM capability is compatible with the sending party's IM capability. If necessary, the sending party may switch to another IM client application so as to be compatible with the recipient's IM client. Additionally, the message history export options may also be varied or controlled based on any policy/privilege settings with respect to the sending and receiving parties. By way of illustration, a sending party may have the capability to unicast, broadcast, or multicast an IM message history, via any combination of the available transmission modes.

Continuing to refer to the flowchart of FIG. 2, upon transmitting the IM message history, either of the parties engaged in the IM communication session may terminate the session if so desired (decision block 214). Otherwise, the parties may continue to chat via the current IM communication session (218).

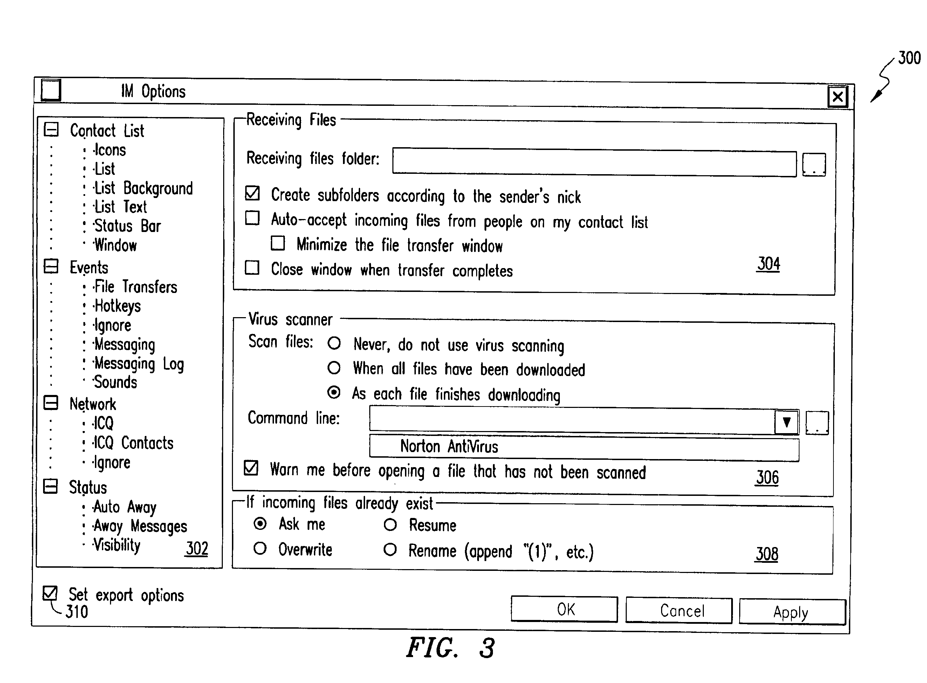

FIG. 3 depicts a rendition of a graphic display window 300 that provides a number of IM options in accordance with one embodiment of the present patent disclosure. In an IM option window 302, a subscriber's IM environment may be customized by specifying various options relating to subscriber contact lists, events, IM networks, plug-ins, and status criteria. A dialog box 304 is provided for specifying a plurality of treatment options with respect to receiving files. A virus scanner window 306 facilitates setting up of options for scanning against computer viruses, spyware, adware, pop-up windows, and the like. Another dialog box window 308 specifies further treatment options with respect to receiving files that already exist on the subscriber's equipment. A software button 310 is provided for setting up various export options, policies, and privileges with respect to sharing IM message history as explained in detail hereinabove.

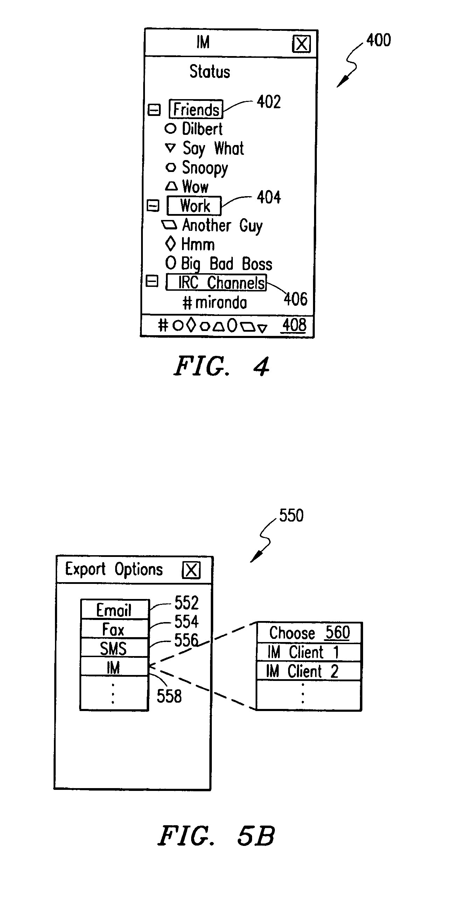

FIG. 4 depicts an exemplary graphic display window 400 associated with an IM client application executing on a communications device. A contact list of FRIENDS 402 includes a number of contacts, each being identified with its IM client application, e.g., an ICQ client, an AIM® client, an MSN Messenger client, a Yahoo!® Messenger client, a JABBER client, a Miranda® IM client, and the like, that may be abstracted as hypothetical iconic shapes. Likewise, another contact list 404 includes a number of WORK-related contacts that are identified with corresponding IM client applications as indicated by respective hypothetical iconic shapes. Available IRC channels 406 may also be identified in the graphic display window 400 for a subscriber. Additionally, an IM tool bar 408 may include icons associated with available IM client applications for the subscriber.

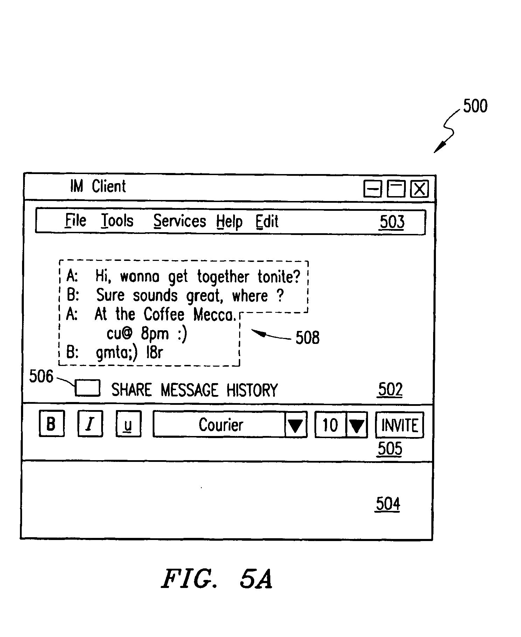

FIGS. 5A and 5B depict exemplary graphic display windows provided for sharing IM message history in accordance with one embodiment of the present patent disclosure. Reference numeral 500 illustrates a display window during an IM communication session. A message history panel 502 and a message composition panel 504 are representative of two dialog boxes available to a subscriber for engaging in IM communications using a particular IM client application. An example of a message history 508 between two parties, A and B, is illustrated in the message history panel 502. A menu bar 503 associated with the message history panel 502 provides for various option menus that may be activated with respect to the ongoing IM communication session. A property bar 505 associated with the message composition panel 504 allows the subscriber to compose responses and generally engage in "conversation" by typing in text messages, entering graphic icons, activating control key and/or function key combinations, etc. A software key or button 506 is exemplified in the message history panel 502 for activating the message history sharing functionality of the present patent disclosure. Those skilled in the art should recognize that in some other exemplary implementations such a software button may be provided in the message composition panel 504 instead. Also, the message history sharing functionality may be activatable via a pull-down menu option in either of the menu bars 503 and 505. Furthermore, it should be apparent that these various panels and pull-down menus may be tiled in any known or heretofore unknown manner on the display screen of the user equipment.

Responsive to activating the message history sharing functionality, an export options menu window 550 (shown in FIG. 5B) may be provided to the subscriber, wherein one or more transmission modes may be selected for exporting the message history 508. As illustrated, an email option 552, a facsimile option 554, an SMS option 556 and an IM option 558 are available to the subscriber. If the IM option 558 is selected, another pull-down menu 560 may be provided to the subscriber for selecting a particular IM client application.

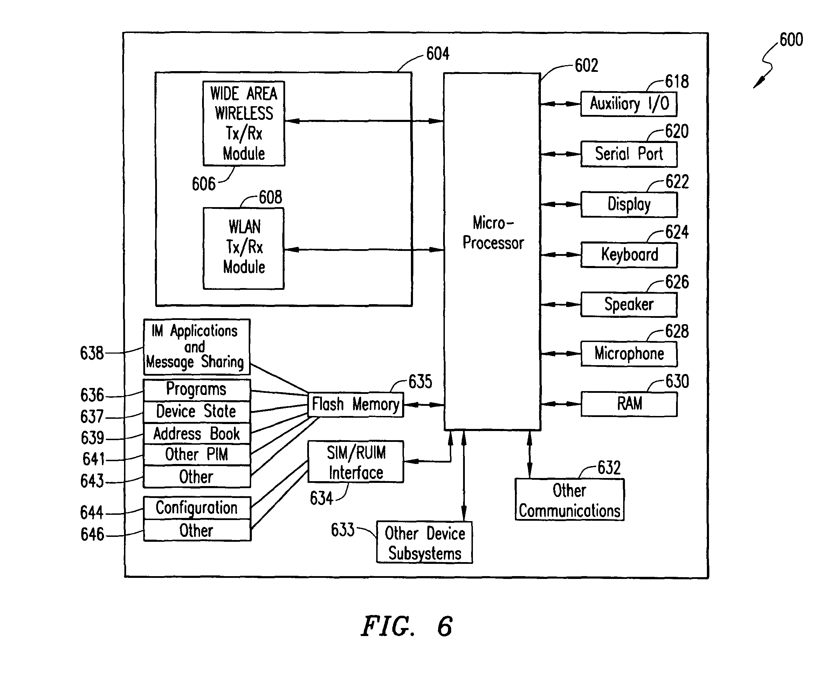

Referring now to FIG. 6, depicted therein is a block diagram of an embodiment of a communications device (i.e., user equipment) 600 operable with a program module provided according to the teachings of the present patent disclosure for sharing IM message history. It will be apparent to those skilled in the art upon reference hereto that although a wireless handheld device is provided as illustrative of the communications device 600, the user equipment operable with program code instructions for sharing IM history can also include any IM-capable computing device, such as desktop computers, laptop computers, etc., as alluded to previously. Additionally, the block diagram illustrated with respect to the communications device 600 can include a number of variations and modifications, in hardware, software or firmware, with respect to the various modules depicted. Accordingly, purely by way of example, a microprocessor 602 providing for the overall control of the communications device 600 is operably coupled to a communication subsystem 604 which includes transmitter/receiver (transceiver) functionality for effectuating multi-mode communications over a plurality of bands. For instance, a wide area wireless Tx/Rx module 606 and a wireless LAN Tx/Rx module 608 are illustrated. Although not particularly shown, each Tx/Rx module may include other associated components such as one or more local oscillator (LO) modules, RF switches, RF bandpass filters, A/D and D/A converters, processing modules such as digital signal processors (DSPs), local memory, etc. As will be apparent to those skilled in the field of communications, the particular design of the communication subsystem 604 may be dependent upon the communications networks with which the communications device is intended to operate. In one embodiment, the communication subsystem 604 is operable with both voice and data communications.

Microprocessor 602 also interfaces with further device subsystems such as auxiliary input/output (I/O) 618, serial port 620, display 622, keyboard 624, speaker 626, microphone 628, random access memory (RAM) 630, a short-range communications subsystem 632, and any other device subsystems generally labeled as reference numeral 633. To control access, a SIM/RUIM interface 634 is also provided in communication with the microprocessor 602. In one implementation, SIM/RUIM interface 634 is operable with a SIM/RUIM card having a number of key configurations 644 and other information 646 such as identification and subscriber-related data.

Operating system software and other control software may be embodied in a persistent storage module (i.e., non-volatile storage) such as Flash memory 635. In one implementation, Flash memory 635 may be segregated into different areas, e.g., storage area for computer programs 636 as well as data storage regions such as device state 637, address book 639, other personal information manager (PIM) data 641, and other data storage areas generally labeled as reference numeral 643. Additionally, an application program module 638 is provided for effectuating IM and other communications related applications. By way of illustration, the application program module includes: (i) program code logic or instructions for wrapping a message history relating to an IM communication session into a file object, wherein the IM communication session is launched by a subscriber using an IM client application running on the communications device 600; and (ii) program code logic or instructions for transmitting the file object to a recipient responsive to selecting a menu option in the IM communication session, the menu option corresponding to a selected transmission mode, as described in detail hereinabove.

## Claims

1. A method for sharing a message history associated with an instant message, IM, communication session between two parties, comprising:
receiving a selection (206) of a menu option (506) in an IM communication session, said menu option corresponding to a request for sending a message history using a selected transmission mode (210), wherein said selected transmission mode comprises at least one of a facsimile transmission mode, an electronic mail, email, transmission mode, and a Short Message Service, SMS, transmission mode;
responsive to receiving the selection (206) of the menu option (506), receiving a selection (208) of a recipient for receiving said message history;
wrapping (212) said message history into a file object based on the selected transmission mode (210) for sharing said message history with said selected recipient; and,
transmitting (212) said file object to said selected recipient via said selected transmission mode (210).

2. The method for sharing a message history associated with an IM communication session between two parties as recited in claim 1, wherein said selected transmission mode comprises the email transmission mode, and further wherein said file object is included as an attachment to an email message transmitted to said recipient.

3. The method for sharing a message history associated with an IM communication session between two parties as recited in claim 1, wherein said selected transmission mode comprises email transmission mode, and further wherein said file object is inserted as part of an email-message body that is transmitted to said recipient.

4. The method for sharing a message history associated with an IM communication session between two parties as recited in claim 1, 2 or 3, wherein said transmitting (212) said file object is effectuated by at least one of said two parties.

5. The method for sharing a message history associated with an IM communication session between two parties as recited in claim 1, 2 or 3, wherein said recipient comprises at least one of said two parties.

6. A system for sharing a message history associated with an instant message, IM , communication session between two parties, the system comprising:
means for selecting a menu option (506) in said IM communication session, said menu option comprising a selected transmission mode (210);
means for determining and selecting (208) a recipient for receiving said message history;
means for wrapping (212) said message history into a file object based on a selected transmission mode (210) for sharing said message history with said selected recipient,
wherein said selected transmission mode (210) comprises at least one of a facsimile transmission mode, an electronic mail, email, transmission mode, and a Short Message Service, SMS, transmission mode; and,
means for transmitting (212) said file object to said selected recipient in accordance with said selected transmission mode (210).

7. The system for sharing a message history associated with an IM communication session between two parties as recited in claim 6, wherein said transmitting (212) said file object is effectuated by at least one of said two parties.

8. The system for sharing a message history associated with an IM communication session between two parties as recited in claim 6, wherein said recipient comprises at least one of said two parties.

9. A communication device (600) operable with a program module (638) for effectuating an instant message, IM, communication functionality, said communication device (600) comprising:
means for receiving activation (502 - 506) of a message history sharing functionality in an IM communication session;
responsive to said means for receiving, means for wrapping (212) a message history relating to said IM communication session into a file object; and,
means for transmitting (212) said file object to a recipient responsive to receiving a selection of a transmission mode (210), wherein said selected transmission mode (210) comprises at least one of a facsimile transmission mode, an electronic mail, email, transmission mode, and a Short Message service, SMS, transmission mode.

10. The communication device (600) operable with a program module for effectuating an IM communication functionality as recited in claim 14, wherein said selected transmission mode comprises email transmission mode, and further wherein said file object is transmitted (212) as an attachment to an email message transmitted to said recipient.

11. The communication device (600) operable with a program module for effectuating an IM communication functionality as recited in claim 14, wherein said selected transmission mode comprises email transmission mode, and further wherein said file object is transmitted (212) as part of an email-message body that is transmitted to said recipient.

## Patentansprüche

1. Verfahren zum gemeinsamen Verwenden einer Nachrichtenhistorie, die zu einer Instant Messaging(IM)-Kommunikationssitzung zwischen zwei Teilnehmern gehört, wobei das Verfahren aufweist:
Empfangen einer Auswahl (206) einer Menüoption (506) in einer IM-Kommunikationssitzung, wobei die Menüoption einer Anforderung zum Übertragen einer Nachrichtenhistorie unter Verwendung eines ausgewählten Übertragungsmodus (210) entspricht, wobei der ausgewählte Übertragungsmodus zumindest einen aus einem Fax-Übertragungsmodus, einem Email(electronic mail)-Übertragungsmodus und einem SMS(Short Message Service)-Übertragungsmodus aufweist;
als Reaktion auf den Empfang der Auswahl (206) der Menüoption (506) Empfangen einer Auswahl (208) eines Empfängers zum Empfangen der Nachrichtenhistorie;
Verpacken (212) der Nachrichtenhistorie in ein Dateiobjekt basierend auf dem ausgewählten Übertragungsmodus (210) zum gemeinsamen Verwenden der Nachrichtenhistorie mit dem ausgewählten Empfänger; und
Übertragen (212) des Dateiobjekts über den ausgewählten Übertragungsmodus (210) an den ausgewählten Empfänger.

2. Verfahren zum gemeinsamen Verwenden einer Nachrichtenhistorie, die zu einer IM-Kommunikationssitzung zwischen zwei Teilnehmern gehört, gemäß Anspruch 1, wobei der gewählte Übertragungsmodus den Email-Übertragungsmodus aufweist und wobei weiter das Dateiobjekt als ein Anhang an eine Email-Nachricht enthalten ist, die an den Empfänger übertragen wird.

3. Verfahren zum gemeinsamen Verwenden einer Nachrichtenhistorie, die zu einer IM-Kommunikationssitzung zwischen zwei Teilnehmern gehört, gemäß Anspruch 1, wobei der gewählte Übertragungsmodus einen Email-Übertragungsmodus aufweist und wobei weiter das Dateiobjekt als Teil eines Email-Nachricht-Hauptteils eingefügt ist, der an den Empfänger übertragen wird.

4. Verfahren zum gemeinsamen Verwenden einer Nachrichtenhistorie, die zu einer IM-Kommunikationssitzung zwischen zwei Teilnehmern gehört, gemäß Anspruch 1, 2 oder 3, wobei das Übertragen (212) des Dateiobjekts durch zumindest einen der zwei Teilnehmer bewirkt wird.

5. Verfahren zum gemeinsamen Verwenden einer Nachrichtenhistorie, die zu einer IM-Kommunikationssitzung zwischen zwei Teilnehmern gehört, gemäß Anspruch 1, 2 oder 3, wobei der Empfänger zumindest einen der zwei Teilnehmer aufweist.

6. System zum gemeinsamen Verwenden einer Nachrichtenhistorie, die zu einer Instant Messaging(IM)-Kommunikationssitzung zwischen zwei Teilnehmern gehört, wobei das System aufweist:
Mittel zum Auswählen einer Menüoption (506) in der IM-Kommunikationssitzung, wobei die Menüoption einen ausgewählten Übertragungsmodus (210) aufweist;
Mittel zum Bestimmen und Auswählen (208) eines Empfängers zum Empfangen der Nachrichtenhistorie;
Mittel zum Verpacken (212) der Nachrichtenhistorie in ein Dateiobjekt basierend auf einem ausgewählten Übertragungsmodus (210) zum gemeinsamen Verwenden der Nachrichtenhistorie mit dem ausgewählten Empfänger, wobei der ausgewählte Übertragungsmodus (210) zumindest einen aus einem Fax-Übertragungsmodus, einem Email(electronic mail)-Übertragungsmodus und einem SMS(Short Message Service)-Übertragungsmodus aufweist; und
Mittel zum Übertragen (212) des Dateiobjekts an den ausgewählten Empfänger in Übereinstimmung mit dem ausgewählten Übertragungsmodus (210).

7. System zum gemeinsamen Verwenden einer Nachrichtenhistorie, die zu einer IM-Kommunikationssitzung zwischen zwei Teilnehmern gehört, gemäß Anspruch 6, wobei das Übertragen (212) des Dateiobjekts durch zumindest einen der zwei Teilnehmer bewirkt wird.

8. System zum gemeinsamen Verwenden einer Nachrichtenhistorie, die zu einer IM-Kommunikationssitzung zwischen zwei Teilnehmern gehört, gemäß Anspruch 6, wobei der Empfänger zumindest einen der zwei Teilnehmer aufweist.

9. Kommunikationsvorrichtung (600), die betriebsfähig ist mit einem Programmmodul (638) zum Bewirken einer Instant Messaging(IM)-Kommunikationsfunktionalität, wobei die Kommunikationsvorrichtung (600) aufweist:
Mittel zum Empfangen einer Aktivierung (502 - 506) einer Funktionalität zum gemeinsamen verwenden einer Nachrichtenhistorie in einer IM-Kommunikationssitzung;
reagierend auf das Mittel zum Empfangen Mittel zum Verpacken (212) einer Nachrichtenhistorie, welche die IM-Kommunikationssitzung betrifft, in ein Dateiobjekt; und
Mittel zum Übertragen (212) des Dateiobjekts an einen Empfänger als Reaktion auf einen Empfang einer Auswahl eines Übertragungsmodus (210), wobei der ausgewählte Übertragungsmodus (210) zumindest einen aus einem Fax-Übertragungsmodus, einem Email(electronic mail)-Übertragungsmodus und einem SMS(Short Message Service)-Übertragungsmodus aufweist.

10. Kommunikationsvorrichtung (600), die betriebsfähig ist mit einem Programmmodul zum Bewirken einer IM-Kommunikationsfunktionalität, gemäß Anspruch 14, wobei der ausgewählte Übertragungsmodus den Email-Übertragungsmodus aufweist und wobei weiter das Dateiobjekt als ein Anhang an eine Email-Nachricht übertragen wird (212), die an den Empfänger übertragen wird.

11. Kommunikationsvorrichtung (600), die betriebsfähig ist mit einem Programmmodul zum Bewirken einer IM-Kommunikationsfunktionalität, gemäß Anspruch 14, wobei der ausgewählte Übertragungsmodus einen Email-Übertragungsmodus aufweist und wobei weiter das Dateiobjekt als Teil eines Email-Nachricht-Hauptteils übertragen wird (212), der an den Empfänger übertragen wird.

## Revendications

1. Procédé pour partager un historique de messages associé à une session de communication de messagerie instantanée, ou IM (pour Instant Message), entre deux correspondants, comprenant :
la réception d'une sélection (206) d'une option de menu (506) dans une session de communication IM, ladite option de menu correspondant à une demande d'envoi d'un historique de messages en utilisant un mode de transmission sélectionné (210), dans lequel ledit mode de transmission sélectionné comprend au moins l'un d'un mode de transmission de télécopie, d'un mode de transmission de courrier électronique, ou courriel, et d'un mode de transmission de Service de Messages Courts, ou SMS ;
en réponse à la réception de la sélection (206) de l'option de menu (506), la réception d'une sélection (208) d'un destinataire de la réception dudit historique de messages ;
l'emballage (212) dudit historique de messages dans un objet de type fichier sur la base du mode de transmission sélectionné (210) pour partager ledit historique de messages avec ledit destinataire sélectionné ; et
la transmission (212) dudit objet de type fichier audit destinataire par l'intermédiaire dudit mode de transmission sélectionné (210).

2. Procédé selon la revendication 1 pour partager un historique de messages associé à une session de communication IM entre deux correspondants, dans lequel ledit mode de transmission sélectionné comprend le mode de transmission de courriels et, en outre, dans lequel ledit objet de type fichier est inclus en tant que pièce jointe à un message de courriel transmis audit destinataire.

3. Procédé selon la revendication 1 pour partager un historique de messages associé à une session de communication IM entre deux correspondants, dans lequel ledit mode de transmission sélectionné comprend un mode de transmission de courriels, et en outre, dans lequel ledit objet de type fichier est inséré en tant que partie du corps d'un message de courriel qui est transmis audit destinataire.

4. Procédé selon la revendication 1, 2 ou 3 pour partager un historique de messages associé à une session de communication IM entre deux correspondants, dans lequel ladite transmission (212) dudit objet de type fichier est effectuée par au moins l'un desdits deux correspondants.

5. Procédé pour partager un historique de messages associé à une session de communication IM entre deux correspondants selon la revendication 1, 2 ou 3, dans lequel ledit destinataire comprend au moins l'un desdits deux correspondants.

6. Système pour partager un historique de messages associé à une session de communication de messagerie instantanée, ou IM, entre deux correspondants, le système comprenant :
un moyen pour sélectionner une option de menu (506) dans ladite session de communication IM, ladite option de menu comprenant un mode de transmission sélectionné (210) ;
un moyen pour déterminer et sélectionner (208) un destinataire destiné à recevoir ledit historique de messages ;
un moyen pour l'emballage (212) dudit historique de messages dans un objet de type fichier sur la base d'un mode de transmission sélectionné (210), pour partager ledit historique de messages avec ledit destinataire sélectionné, dans lequel ledit mode de transmission sélectionné (210) comprend au moins l'un d'un mode de transmission de télécopie, d'un mode de transmission de courrier électronique, ou courriel, et d'un mode de transmission de Service de Messages Courts, ou SMS ; et
un moyen pour la transmission (212) dudit objet de type fichier audit destinataire sélectionné en conformité avec ledit mode de transmission sélectionné (210).

7. Système selon la revendication 6 pour partager un historique de messages associé à une session de communication IM entre deux correspondants, dans lequel ladite transmission (212) dudit objet de type fichier est effectuée par au moins l'un desdits deux correspondants.

8. Système pour partager un historique de messages associé à une session de communication IM entre deux correspondants selon la revendication 6, dans lequel ledit destinataire comprend au moins l'un desdits deux correspondants.

9. Dispositif de communication (600) pouvant être mis en fonctionnement avec un module de programmation (638) destiné à mettre en oeuvre une fonctionnalité de communication de messagerie instantanée, ou IM, ledit dispositif de communication (600) comprenant :
un moyen pour la réception d'une activation (502-506) d'une fonctionnalité de partage de l'historique de messages dans un système de communication IM ;
en réponse audit moyen de réception, un moyen pour l'emballage (212) d'un historique de messages concernant ladite session de communication IM dans un objet de type fichier ; et
un moyen pour la transmission (212) dudit objet de type fichier à un destinataire en réponse à la réception d'une sélection d'un mode de transmission (210), dans lequel ledit mode de transmission sélectionné (210) comprend au moins l'un d'un mode de transmission de télécopie, d'un mode de transmission de courrier électronique, ou courriel, et d'un mode de transmission de Service de Messages Courts, ou SMS.

10. Dispositif de communication (600) selon la revendication 14 pouvant être mis en fonctionnement avec un module de programmation destiné à mettre en oeuvre une fonctionnalité de communication IM, dans lequel ledit mode de transmission sélectionné comprend un mode de transmission de courriels, et en outre, dans lequel ledit objet de type fichier est transmis (212) en tant que pièce jointe à un message de courriel transmis audit destinataire.

11. Dispositif de communication (600) selon la revendication 14 pouvant être mis en fonctionnement avec un module de programmation destiné à mettre en oeuvre une fonctionnalité de communication IM, dans lequel ledit mode de transmission sélectionné comprend un mode de transmission de courriel, et en outre, dans lequel ledit objet de type fichier est transmis (212) en tant que partie du corps d'un message de courriel qui est transmis audit destinataire.
